# FASCICULE DE BREVET EUROPEEN

(11) **EP 4 407 723 B1**
(45) Date de publication et mention de la délivrance du brevet: **04.11.2026**
(21) Numéro de dépôt: 24174130.5
(22) Date de dépôt: 27.01.2022
(51) Int. Cl.: H01M 8/2475, H01M 8/249, H01M 8/2465, H01M 8/2485, H01M 8/04119

(54) **DISPOSITIF DE REGROUPEMENT DE PILES À COMBUSTIBLE COMPORTANT UN SUPPORT CONFIGURÉ POUR ALIMENTER EN FLUIDE LES PILES À COMBUSTIBLE, AÉRONEF COMPORTANT AU MOINS UN TEL DISPOSITIF DE REGROUPEMENT DE PILES À COMBUSTIBLE**
BRENNSTOFFZELLEN-GRUPPIERUNGSVORRICHTUNG MIT EINEM TRÄGER ZUR VERSORGUNG DER BRENNSTOFFZELLEN MIT FLUID, FLUGZEUG MIT MINDESTENS EINER SOLCHEN BRENNSTOFFZELLEN-GRUPPIERUNGSVORRICHTUNG
FUEL CELL ASSEMBLY DEVICE COMPRISING A SUPPORT CONFIGURED TO SUPPLY FLUID TO THE FUEL CELLS, AIRCRAFT COMPRISING AT LEAST ONE SUCH FUEL CELL ASSEMBLY DEVICE

(30) Priorité: 29.01.2021 FR 2100905
(43) Date de publication de la demande: 31.07.2024
(62) Numéro(s) de document de la (des) demande(s) initiale(s) en application de l'article 76 CBE: 22153608.9 / 4 037 046
(73) Titulaire: AIRBUS OPERATIONS (S.A.S.), 31060 Toulouse (FR)
(72) Inventeur: CAYSSIALS, Julien, 31060 Toulouse (FR); COOK, Jordan, 31060 Toulouse (FR); FERNANDEZ GARCIA, Janik, 31060 Toulouse (FR); LABARTHE, Christophe, 31060 Toulouse (FR)
(74) Mandataire: Airbus-OPS SAS

(56) Documents cités:
- US-A1- 2004 043 274
- US-A1- 2011 183 229
- US-A1- 2016 072 146

## Description

La présente demande se rapporte à un dispositif de regroupement de piles à combustible comportant un support configuré pour alimenter en fluide les piles à combustible ainsi qu'à un aéronef comportant au moins un tel dispositif de regroupement de piles à combustible.

Une pile à combustible est un dispositif générant une tension électrique grâce à l'oxydation sur une électrode d'un combustible réducteur, comme de l'hydrogène par exemple, couplée à la réduction sur une autre électrode d'un oxydant, comme l'oxygène de l'air par exemple.

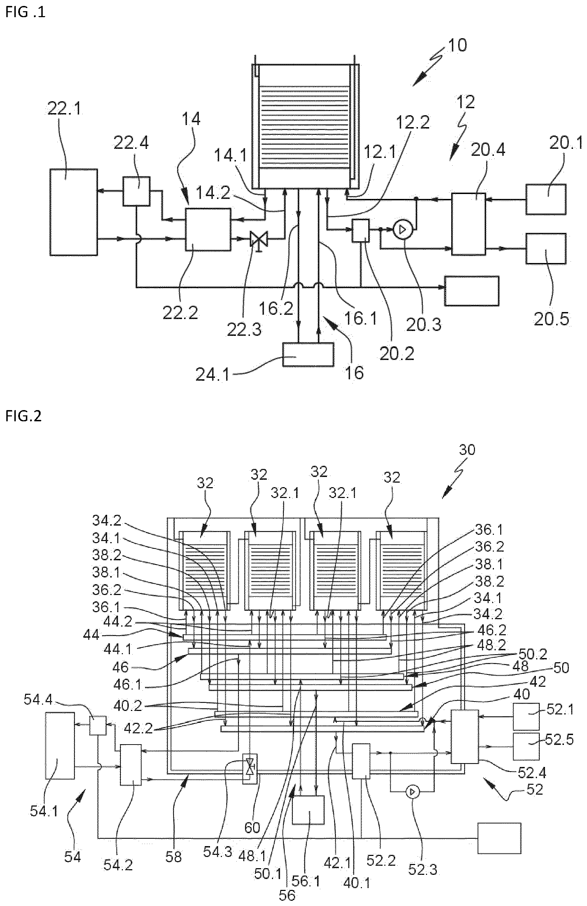

Selon un mode de réalisation visible sur la figure 1, une pile à combustible 10 comprend des premières entrée et sortie 12.1, 12.2 pour un premier fluide, notamment le combustible, des deuxièmes entrée et sortie 14.1, 14.2 pour un deuxième fluide, notamment l'oxydant, ainsi que des troisièmes entrée et sortie 16.1, 16.2 pour un troisième fluide, notamment un fluide de refroidissement.

Selon une configuration, les premières entrée et sortie 12.1, 12.2 destinées au premier fluide sont reliées à un premier circuit 12 qui comprend une alimentation en premier fluide 20.1 ainsi que différents équipements comme un premier système d'extraction d'eau 20.2, une pompe de recirculation 20.3, un premier système de gestion des flux 20.4 et un système de vidange 20.5 par exemple.

Les deuxièmes entrée et sortie 14.1, 14.2, destinées au deuxième fluide, sont reliées à un deuxième circuit 14 qui comprend une alimentation en deuxième fluide 22.1 ainsi que différents équipements comme un système de déshumidification 22.2, un deuxième système de gestion des flux 22.3 et un deuxième système d'extraction d'eau 22.4 par exemple.

Les troisièmes entrée et sortie 16.1, 16.2, destinées au troisième fluide, sont reliées à un troisième circuit 16 qui comprend un échangeur thermique 24.1 configuré pour réguler la température du troisième fluide.

Dans le cas d'un aéronef, plusieurs piles à combustible 10 sont nécessaires. La multiplication des piles à combustible 10, des circuits de fluide et de leurs équipements conduit à augmenter le nombre de points de fixation sur la structure primaire de l'aéronef, l'espace nécessaire pour loger tous ces éléments, le nombre de connexions et donc le risque de fuite.

Le document US20160072146 décrit un module de pile à combustible composé d'une base et de plusieurs piles à combustibles amovibles. Les modules peuvent être mis hors ligne individuellement afin d'être réparés ou entretenus sans arrêter le fonctionnement des autres modules du système qui restent actifs pour générer de l'électricité.

La présente invention vise à remédier à tout ou partie des inconvénients de l'art antérieur.

A cet effet, l'invention a pour objet un dispositif de regroupement de piles à combustible comprenant au moins deux piles à combustible dans lesquelles circule au moins un premier fluide, caractérisé en ce que le dispositif de regroupement comprend un support ainsi qu'au moins une portion d'un premier circuit pour le premier fluide comprenant une première nourrice configurée pour alimenter en premier fluide les piles en combustible et un premier collecteur configuré pour collecter le premier fluide des piles à combustible, le support comportant un carter, la première nourrice et le premier collecteur étant solidaires du carter et positionnés entre le carter et les piles à combustible, le dispositif de regroupement comprenant au moins un équipement (52.2, 90, 90', 90") pour au moins un circuit de fluide (52, 54, 56), caractérisé en ce que ledit équipement comporte des première et deuxième parties (86, 88, 92, 94) reliées de manière démontable par des éléments de liaison, au moins l'une des première et deuxième parties (86, 88, 92, 94) étant solidaire et intégrée au carter (60), la partie démontable étant une partie active.

Un tel dispositif de regroupement peut être déplacé ou manipulé d'un seul tenant. Il permet en outre de limiter le nombre de points de fixation sur une structure primaire d'un aéronef. Le fait de positionner la première nourrice et le premier collecteur entre le carter et les piles à combustible permet d'obtenir un ensemble plus compact.

Selon une autre caractéristique, chaque carter comprend au moins un épaulement extérieur s'étendant sur au moins une partie de sa périphérie.

Ainsi du fait d'avoir un dispositif de regroupement d'un seul tenant, l'épaulement permet de transférer les charges de l'ensemble vers la structure sur laquelle on fait reposer l'épaulement et comme vu plus loin en particulier la structure primaire d'un aéronef.

Selon une caractéristique, l'épaulement s'étend sur toute la périphérie du dispositif.

Selon une autre caractéristique, le dispositif de regroupement comprend :
- au moins une deuxième portion d'un deuxième circuit pour un deuxième fluide circulant dans les piles à combustible comportant une deuxième nourrice configurée pour alimenter en deuxième fluide les piles à combustible ainsi qu'un deuxième collecteur configuré pour collecter le deuxième fluide des piles à combustible,
- au moins une troisième portion d'un troisième circuit pour un troisième fluide circulant dans les piles à combustible comportant une troisième nourrice configurée pour alimenter en troisième fluide les piles à combustible ainsi qu'un troisième collecteur configuré pour collecter le troisième fluide des piles à combustible,
- les deuxième et troisième nourrices étant solidaires du carter, au moins l'une d'elles étant positionnée entre le carter et les piles à combustible, les deuxième et troisième collecteurs étant solidaires du carter, au moins l'un d'eux étant positionné entre le carter et les piles à combustible.

Selon une autre caractéristique, le carter comprend au moins une ouverture configurée pour coopérer avec au moins une des piles à combustible et traversée par des conduits reliés à la pile à combustible.

Selon une autre caractéristique, le carter comprend un fond, deux parois transversales ainsi que deux parois longitudinales qui délimitent un logement configuré pour loger au moins une nourrice parmi les première, deuxième et troisième nourrices ainsi qu'au moins un collecteur parmi les premier, deuxième et troisième collecteurs.

Selon une autre caractéristique, les parois transversales et longitudinales comprennent des bords supérieurs qui forment une ceinture entourant en fonctionnement les piles à combustible.

Selon une autre caractéristique, le carter comprend au moins un épaulement intérieur décalé vers le fond par rapport aux bords supérieurs des parois transversales et longitudinales, ledit épaulement intérieur formant une surface de contact pour les piles à combustible.

Selon une autre caractéristique, pour chaque première, deuxième ou troisième nourrice ou collecteur positionné entre le carter et les piles à combustible, le carter comprend un premier ou deuxième orifice traversant configuré pour loger un conduit d'alimentation ou d'échappement de la nourrice ou du collecteur ou un conduit prolongeant le conduit d'alimentation ou d'échappement de la nourrice ou du collecteur.

Selon une autre caractéristique, pour chaque première, deuxième ou troisième nourrice ou collecteur positionné à l'extérieur du carter, le carter comprend un troisième ou quatrième orifice traversant pour chaque conduit de sortie ou d'entrée de la nourrice ou du collecteur, chaque troisième ou quatrième orifice traversant étant configuré pour loger un des conduits de sortie ou d'entrée de la nourrice ou du collecteur ou un conduit prolongeant un des conduits de sortie ou d'entrée de la nourrice ou du collecteur.

Selon l'invention, le dispositif de regroupement comprend au moins un équipement pour au moins un circuit de fluide comportant des première et deuxième parties reliées de manière démontable par des éléments de liaison, au moins l'une des première et deuxième parties étant solidaire et intégrée au carter.

Ainsi le dispositif de regroupement étant déplaçable ou manipulable d'un seul tenant, il est possible d'intervenir facilement et rapidement sur une partie démontable dans laquelle on prévoit par exemple des éléments sur lesquels une maintenance plus régulière ou plus complexe est à réaliser.

Selon l'invention, la partie démontable est une partie active.

Selon une autre caractéristique, l'équipement est une valve et la partie démontable comprend la commande de l'écoulement de fluide entre une partie amont et aval compris dans la partie intégrée au carter.

Selon une autre caractéristique, un équipement est un système d'extraction d'eau et la partie active comprend une valve permettant de purger l'eau créée par le système d'extraction.

L'invention a également pour objet un aéronef comprenant une structure primaire ainsi qu'au moins un dispositif de regroupement de piles à combustible selon l'une des caractéristiques précédentes.

Selon une autre caractéristique, l'aéronef comprend au moins un châssis relié à la structure primaire de l'aéronef pour chaque dispositif de regroupement, le châssis comprenant un cadre configuré pour permettre l'insertion des piles à combustible du dispositif de regroupement et contre lequel prend appui le carter.

Selon une autre caractéristique, chaque carter comprend au moins un épaulement extérieur s'étendant sur au moins une partie de sa périphérie et configuré pour prendre appui contre l'un des cadres du châssis pour transférer les charges du carter vers la structure primaire.

Selon une autre caractéristique, un joint d'étanchéité périphérique est intercalé entre l'épaulement extérieur du carter et le cadre du châssis.

D'autres caractéristiques et avantages ressortiront de la description de l'invention qui va suivre, description donnée à titre d'exemple uniquement, en regard des dessins annexés parmi lesquels :
- La figure 1 est une représentation schématique d'une pile à combustible et de ses différents circuits de fluide illustrant un mode de réalisation de l'art antérieur,
- La figure 2 est une représentation schématique d'un dispositif de regroupement de piles à combustible illustrant un mode de réalisation de l'invention,
- La figure 3 est une vue en perspective d'un dispositif de regroupement de piles à combustible illustrant un mode de réalisation de l'invention à l'état assemblé,
- La figure 4 est une vue en perspective du dispositif de regroupement de piles à combustible visible sur la figure 3 à l'état démonté,
- La figure 5 est une vue en perspective montrant en détails certaines parties de la figure 4,
- La figure 6 est une vue en perspective d'un support configuré pour alimenter en fluide les piles à combustible illustrant un mode de réalisation de l'invention,
- La figure 7 est une coupe transversale d'un carter du support visible sur la figure 6,
- La figure 8 est une vue latérale d'un premier équipement d'un circuit de fluide indépendant, sur la partie gauche de la figure, et semi-intégré, sur la partie droite de la figure, au support visible sur la figure 6,
- La figure 9 est une vue latérale d'un deuxième équipement d'un circuit de fluide indépendant, sur la partie gauche de la figure, et semi-intégré, sur la partie droite de la figure, au support visible sur la figure 6,
- La figure 10 est une vue en perspective d'un châssis supportant un premier dispositif de regroupement de piles à combustible illustrant un premier mode de réalisation,
- La figure 11 est une vue en perspective du châssis visible sur la figure 10 et d'un dispositif de regroupement de piles à combustible en cours de montage,
- La figure 12 est une vue en perspective du châssis et des dispositifs de regroupement de piles à combustible visibles sur la figure 11, d'une nourrice principale et d'un collecteur principal en cours de montage, et
- La figure 13 est une vue en perspective du châssis et des dispositifs de regroupement de piles à combustible visibles sur la figure 12 assemblés.

Sur les figures 2 à 5, un dispositif de regroupement 30 de piles à combustible comprend plusieurs piles à combustible 32 comportant chacune des premières entrée et sortie 34.1, 34.2 pour un premier fluide, notamment un combustible, des deuxièmes entrée et sortie 36.1, 36.2 pour un deuxième fluide, notamment un oxydant, ainsi que des troisièmes entrée et sortie 38.1, 38.2 pour un troisième fluide, notamment un fluide de refroidissement. Selon les modes de réalisation visibles sur les figures 2 à 5, le dispositif de regroupement 30 comprend quatre piles à combustible 32. A minima, le dispositif de regroupement 30 comprend au moins deux piles à combustible 32. Selon une application, le premier fluide est de l'hydrogène, le deuxième fluide de l'air et le troisième fluide est un liquide de refroidissement.

Selon une configuration, chaque pile à combustible 32 a une forme parallélépipédique et présente une face inférieure 32.1 au niveau de laquelle sont positionnées les différentes entrées et sorties 34.1, 34.2, 36.1, 36.2, 38.1, 38.2.

Selon une application, un aéronef comprend une structure primaire ainsi qu'au moins un dispositif de regroupement 30 relié, directement ou indirectement, à la structure primaire.

Selon un mode de réalisation détaillé sur la figure 2, le dispositif de regroupement 30 comprend une première nourrice 40, destinée au premier fluide, qui présente un conduit d'alimentation 40.1 et autant de conduits de sortie 40.2 que le nombre de premières entrées 34.1 des piles à combustible 32 du dispositif de regroupement 30. En présence de quatre piles à combustible 32, la première nourrice 40 comprend quatre conduits de sortie 40.2. Plus généralement, la première nourrice 40 est configurée pour alimenter en premier fluide les piles à combustible 32 du dispositif de regroupement 30.

Selon une configuration, cette première nourrice 40, destinée à l'hydrogène, comprend une réduction de la section de passage, notamment au niveau des conduits de sortie 40.2, afin de limiter le débit d'hydrogène en cas de défaillance au niveau d'un raccordement avec l'une des premières entrées 34.1 des piles à combustible 32. Cette configuration contribue à renforcer la sécurité du dispositif de regroupement 30.

Le dispositif de regroupement 30 comprend un premier collecteur 42, destiné au premier fluide, qui présente un conduit d'échappement 42.1 et autant de conduits d'entrée 42.2 que le nombre de premières sorties 34.2 des piles à combustible 32 du dispositif de regroupement 30. En présence de quatre piles à combustible 32, le premier collecteur 42 comprend quatre conduits d'entrée 42.2. Plus généralement, le premier collecteur 42 est configuré pour collecter le premier fluide des piles à combustible 32 du dispositif de regroupement 30.

Selon une configuration, ce premier collecteur 42 destiné à l'hydrogène comprend une réduction de la section de passage, notamment au niveau des conduits d'entrée 42.2, afin de limiter le débit d'hydrogène en cas de défaillance au niveau d'un raccordement avec l'une des premières sorties 34.2 des piles à combustible 32. Cette configuration contribue à renforcer la sécurité du dispositif de regroupement 30.

Le dispositif de regroupement 30 comprend une deuxième nourrice 44, destinée au deuxième fluide, qui présente un conduit d'alimentation 44.1 et autant de conduits de sortie 44.2 que le nombre de deuxièmes entrées 36.1 des piles à combustible 32 du dispositif de regroupement 30. En présence de quatre piles à combustible 32, la deuxième nourrice 44 comprend quatre conduits de sortie 44.2. Plus généralement, la deuxième nourrice 44 est configurée pour alimenter en deuxième fluide les piles à combustible 32 du dispositif de regroupement 30.

Le dispositif de regroupement 30 comprend un deuxième collecteur 46, destiné au deuxième fluide, qui présente un conduit d'échappement 46.1 et autant de conduits d'entrée 46.2 que le nombre de deuxièmes sorties 36.2 des piles à combustible 32 du dispositif de regroupement 30. En présence de quatre piles à combustible 32, le deuxième collecteur 46 comprend quatre conduits d'entrée 46.2. Plus généralement, le deuxième collecteur 46 est configuré pour collecter le deuxième fluide des piles à combustible 32 du dispositif de regroupement 30.

Le dispositif de regroupement 30 comprend une troisième nourrice 48, destinée au troisième fluide, qui présente un conduit d'alimentation 48.1 et autant de conduits de sortie 48.2 que le nombre de troisièmes entrées 38.1 des piles à combustible 32 du dispositif de regroupement 30. En présence de quatre piles à combustible 32, la troisième nourrice 48 comprend quatre conduits de sortie 48.2. Plus généralement, la troisième nourrice 48 est configurée pour alimenter en troisième fluide les piles à combustible 32 du dispositif de regroupement 30.

Le dispositif de regroupement 30 comprend un troisième collecteur 50, destiné au troisième fluide, qui présente un conduit d'échappement 50.1 et autant de conduits d'entrée 50.2 que le nombre de troisièmes sorties 38.2 des piles à combustible 32 du dispositif de regroupement 30. En présence de quatre piles à combustible 32, le troisième collecteur 50 comprend quatre conduits d'entrée 50.2. Plus généralement, le troisième collecteur 50 est configuré pour collecter le troisième fluide des piles à combustible 32 du dispositif de regroupement 30.

Selon une configuration visible sur la figure 2, le dispositif de regroupement 30 comprend un premier circuit de fluide 52 comportant la première nourrice 40, le premier collecteur 42, une alimentation en premier fluide 52.1 ainsi que différents équipements comme un premier système d'extraction d'eau 52.2, une pompe de recirculation 52.3, un premier système de gestion des flux 52.4 et un système de vidange 52.5 par exemple.

Selon une première variante, chaque dispositif de regroupement 30 comprend sa propre alimentation en premier fluide 52.1 et son propre système de vidange 52.5. Selon une autre variante, une alimentation en premier fluide 52.1 peut être commune à plusieurs dispositifs de regroupement 30. De même, un système de vidange 52.5 peut être commun à plusieurs dispositifs de regroupement 30.

Selon une configuration visible sur la figure 2, le dispositif de regroupement 30 comprend un deuxième circuit de fluide 54 comportant la deuxième nourrice 44, le deuxième collecteur 46, une alimentation en deuxième fluide 54.1 ainsi que différents équipements comme un système de déshumidification 54.2, un deuxième système de gestion des flux 54.3 et un deuxième système d'extraction d'eau 54.4 par exemple.

Selon une première variante, chaque dispositif de regroupement 30 comprend sa propre alimentation en deuxième fluide 54.1 et son propre système d'extraction d'eau 54.4. Selon une autre variante, une alimentation en deuxième fluide 54.1 peut être commune à plusieurs dispositifs de regroupement 30. De même, un système d'extraction d'eau 54.4 peut être commun à plusieurs dispositifs de regroupement 30.

Selon une configuration visible sur la figure 2, le dispositif de regroupement 30 comprend un troisième circuit de fluide 56 comportant la troisième nourrice 48, le troisième collecteur 50 ainsi qu'au moins un échangeur thermique 56.1 configuré pour réguler la température du troisième fluide.

Selon une première variante, chaque dispositif de regroupement 30 comprend son propre échangeur thermique 56.1. Selon une deuxième variante, un échangeur thermique 56.1 peut être commun à plusieurs dispositifs de regroupement 30.

Selon une caractéristique de l'invention, le dispositif de regroupement 30 comprend un support 58, positionné au niveau des faces inférieures 32.1 des piles à combustible 32 du dispositif de regroupement 30, qui comprend au moins un carter 60, au moins une nourrice parmi les première, deuxième et troisième nourrices 40, 44, 48 positionnée entre le carter 60 et les piles à combustible 32, au moins un collecteur parmi les premier, deuxième et troisième collecteurs 42, 46, 50 positionné entre le carter 60 et les piles à combustible 32.

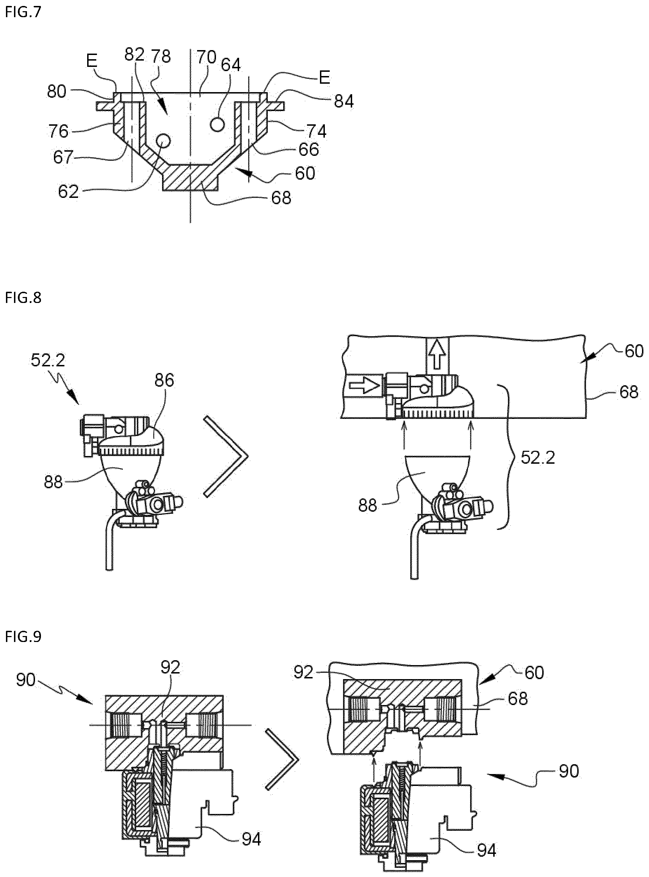

Selon une configuration visible sur la figure 7, le carter 60, les première, deuxième et troisième nourrices 40, 44, 48 ainsi que les premier, deuxième et troisième collecteurs 42, 46, 50 sont des pièces disjointes. Selon une autre configuration, au moins un élément parmi les première, deuxième et troisième nourrices 40, 44, 48 ainsi que les premier, deuxième et troisième collecteurs 42, 46, 50 est intégré dans le carter 60 et ne forme qu'une unique et même pièce avec le carter 60.

La nourrice et le collecteur d'un même fluide sont situés entre le carter 60 et les piles à combustible 32 ou à l'extérieur d'une zone comprise entre le carter 60 et les piles à combustible 32.

Selon un premier mode de réalisation visible sur la figure 2, le dispositif de regroupement 30 comprend des première, deuxième et troisième nourrices 40, 44, 48 ainsi que des premier, deuxième et troisième collecteurs 42, 46, 50 positionnés entre le carter 60 et les piles à combustible 32.

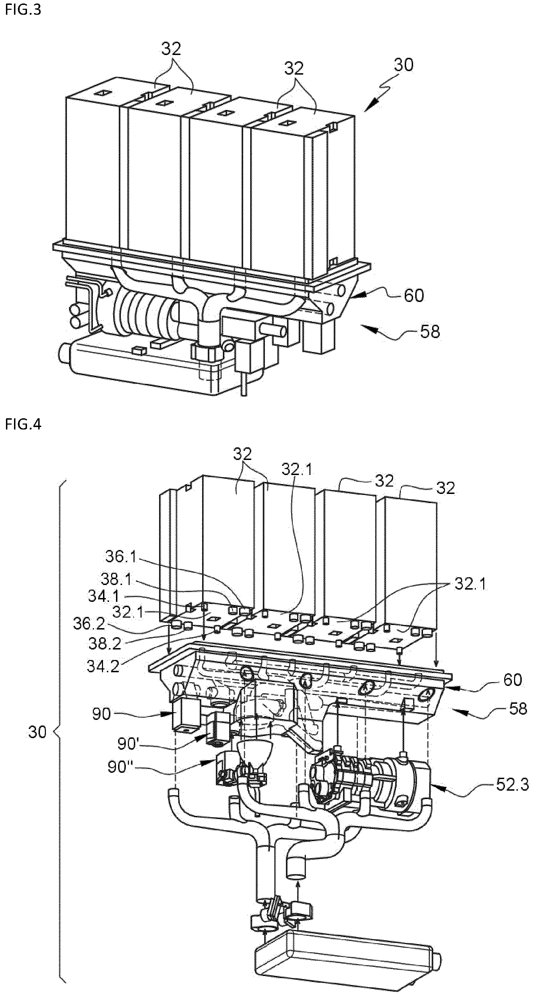

Selon un deuxième mode de réalisation visible sur les figures 3 à 5, le dispositif de regroupement 30 comprend des première et troisième nourrices 40, 48 ainsi que des premier et troisième collecteurs 42, 50 positionnés entre le carter et les piles à combustible 32, la première nourrice et le premier collecteur 40, 42 étant destinés au premier fluide (hydrogène), la troisième nourrice et le troisième collecteur 48, 50 étant destinés au troisième fluide (fluide de refroidissement).

Chaque première, deuxième ou troisième nourrice 40, 44, 48 et/ou chaque premier, deuxième ou troisième collecteur 42, 46, 48 positionné(s) entre le carter 60 et les piles à combustible 32 est supporté(e) par le carter 60 et fixé(e) à ce dernier. Cet agencement permet de réduire le nombre de points de fixation sur la structure primaire de l'aéronef.

Selon un mode de réalisation, chaque première, deuxième ou troisième nourrice 40, 44, 48 et/ou chaque premier, deuxième ou troisième collecteur 42, 46, 48 positionné(e) à l'extérieur du carter 60 est fixé(e) à ce dernier. Cet agencement permet de réduire le nombre de points de fixation sur la structure primaire de l'aéronef.

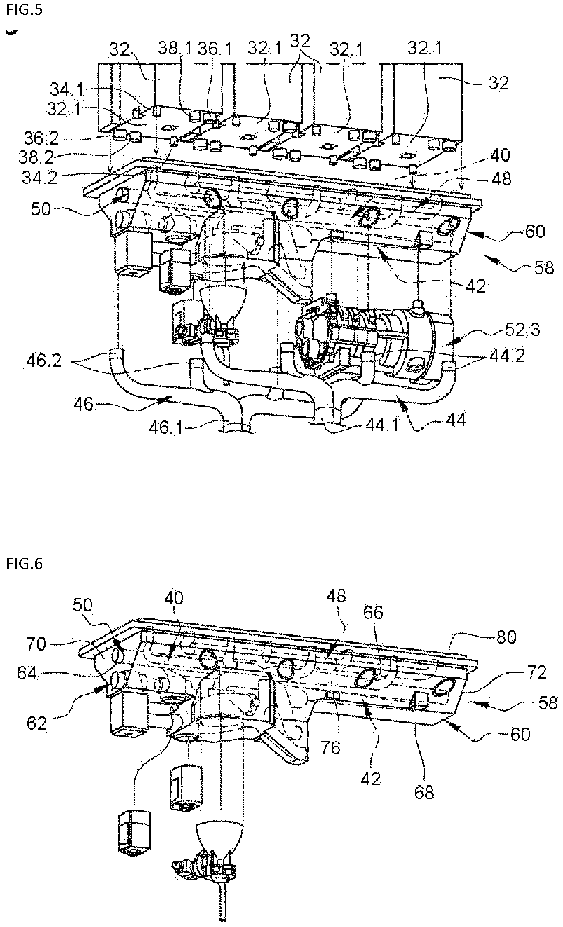

Comme illustré sur les figures 6 et 7, pour chaque première, deuxième ou troisième nourrice 40, 44, 48 positionnée entre le carter 60 et les piles à combustible 32, le carter 60 comprend un premier orifice traversant 62 configuré pour faire communiquer l'intérieur et l'extérieur du carter et loger le conduit d'alimentation 40.1, 44.1, 48.1 de la nourrice 40, 44, 48 ou un conduit prolongeant le conduit d'alimentation 40.1, 44.1, 48.1 de la nourrice 40, 44, 48.

Comme illustré sur les figures 6 et 7, pour chaque premier, deuxième ou troisième collecteur 42, 46, 48 positionné entre le carter 60 et les piles à combustible 32, le carter 60 comprend un deuxième orifice traversant 64 configuré pour faire communiquer l'intérieur et l'extérieur du carter 60 et loger le conduit d'échappement 42.1, 46.1, 50.1 du collecteur 42, 46, 48 ou un conduit prolongeant le conduit d'échappement 42.1, 46.1, 50.1 du collecteur 42, 46, 48.

Pour chaque première, deuxième ou troisième nourrice 40, 44, 48 qui n'est pas positionnée entre le carter 60 et les piles à combustible 32, le carter 60 comprend un troisième orifice traversant 66 pour chaque conduit de sortie 40.2, 44.2, 48.2 de la nourrice 40, 44, 48, comme illustré sur les figures 6 et 7, chaque troisième orifice traversant 64 étant configuré pour loger un des conduits de sortie 40.2, 44.2, 48.2 de la nourrice 40, 44, 48 ou un conduit prolongeant un des conduits de sortie 40.2, 44.2, 48.2 de la nourrice 40, 44, 48.

Pour chaque premier, deuxième ou troisième collecteur 42, 46, 48 qui n'est pas positionné entre le carter 60 et les piles à combustible 32, le carter 60 comprend un quatrième orifice traversant 67 pour chaque conduit d'entrée 42.2, 46.2, 50.2 du collecteur 42, 46, 48, comme illustré sur la figure 7, chaque quatrième orifice traversant 67 étant configuré pour loger un des conduits d'entrée 42.2, 46.2, 50.2 du collecteur 42, 46, 48 ou un conduit prolongeant un des conduits d'entrée 42.2, 46.2, 50.21 du collecteur 42, 46, 48.

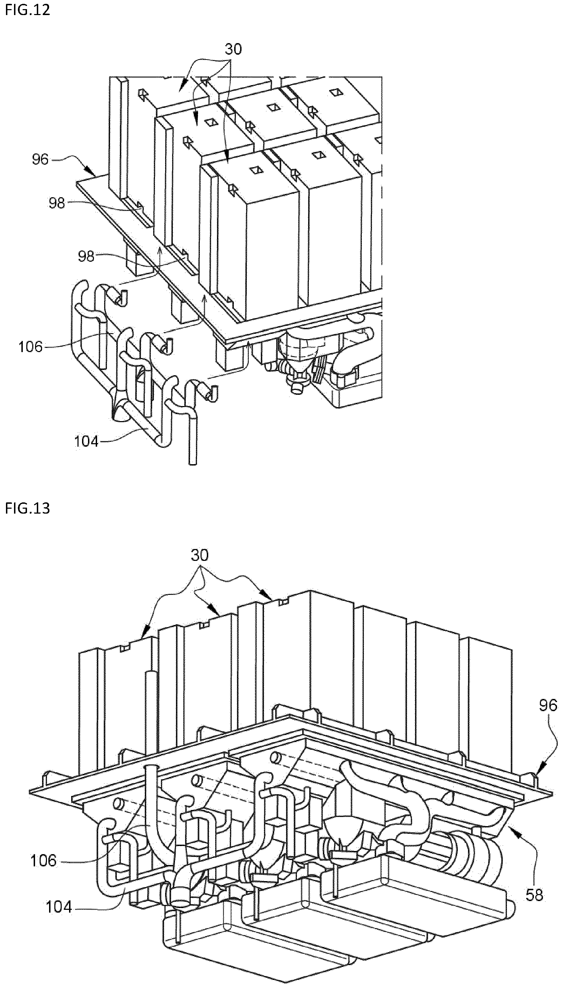

Selon une configuration visible par exemple sur la figure 13, les piles à combustible 32 sont faiblement espacées dans un plan horizontal et alignées selon une direction longitudinale, leurs faces inférieures 32.1 étant sensiblement coplanaires.

Selon une autre configuration, les piles à combustible pourraient être positionnées les unes sur les autres et être faiblement espacées selon une direction verticale. Selon cette autre configuration, chacune des piles à combustible comprend une face latérale coplanaire avec une face latérale de chacune des autres piles à combustible et le support 58 est positionné au niveau de ces faces latérales.

Dans la forme illustrée, les piles à combustible 32 du dispositif de regroupement 30 présentent une section rectangulaire dans un plan parallèle aux faces inférieures 32.1, avec une première dimension selon la direction longitudinale et une deuxième dimension selon une direction transversale perpendiculaire à la direction longitudinale.

Le carter 60 présente un fond 68, deux parois transversales 70, 72 ainsi que deux parois longitudinales 74, 76 qui délimitent un logement 78, sensiblement étanche, configuré pour loger au moins une nourrice parmi les première, deuxième et troisième nourrices 40, 44, 48 ainsi qu'au moins un collecteur parmi les premier, deuxième et troisième collecteurs 42, 46, 50. Le logement 78 est partiellement obturé par les piles à combustible 32 lorsque ces dernières sont reliées au carter 60. Bien entendu, le carter 60 n'est pas limité à cette géométrie. Le carter 60 peut avoir une forme plus ou moins complexe qui présente au moins une ouverture configurée pour coopérer avec au moins une des piles à combustible 32, ladite ouverture étant traversée par des conduits reliés à la pile à combustible 32. Le carter 60 pourrait être fermé par un panneau sur sa face supérieure.

Les parois transversales et longitudinales 70, 72, 74, 76 comprennent des bords supérieurs E qui forment une ceinture 80 entourant en fonctionnement les piles à combustible 32. Cette ceinture 80 est sensiblement rectangulaire en vue de dessus et présente une longueur légèrement supérieure à la première dimension ainsi qu'une largeur sensiblement égale à la deuxième dimension.

Selon un mode de réalisation, le carter 60 comprend au moins un épaulement intérieur 82 décalé vers le fond 68 par rapport aux bords supérieurs E des parois transversales et longitudinales 70, 72, 74, 76. Selon une configuration, les parois longitudinales 74, 76 comprennent chacune un épaulement intérieur 82. Ces épaulements intérieurs 82 forment une surface de contact pour les faces inférieures 32.1 des piles à combustible 32. Les piles à combustible 32 sont reliées au carter 60 par des éléments de fixation appropriés.

Selon un mode de réalisation, le carter 60 comprend au moins un épaulement extérieur 84 décalé vers le fond 68 par rapport aux bords supérieurs E des parois transversales et longitudinales 70, 72, 74, 76. Selon une configuration, l'épaulement extérieur 84 s'étend à l'extérieur de la ceinture 80, sur toute sa périphérie.

Selon une autre caractéristique de l'invention, au moins un équipement des premier, deuxième et/ou troisième circuits de fluide 52, 54, 56 est positionné à l'extérieur du carter 60 et relié à ce dernier par des éléments de fixation appropriés. C'est notamment le cas de la pompe de recirculation 52.3 du premier circuit de fluide 52.

Selon un mode de réalisation visible sur la partie gauche de la figure 8, le premier système d'extraction d'eau 52.2 comprend une première partie supérieure 86 comportant au moins un tronçon destiné au premier fluide, une partie inférieure 88 comportant au moins un conduit d'écoulement destiné à l'eau ainsi que des éléments de liaison pour relier de manière démontable les première et deuxième parties 86, 88. Selon une configuration visible sur la partie droite de la figure 8, la première partie 86 du premier système d'extraction d'eau 52.2 est solidaire et intégrée au carter 60, notamment au fond 68 du carter 60. La deuxième partie 88 comprend une valve dans le cas illustré une valve électrique permettant de purger l'eau quand la quantité d'eau créée par le système d'extraction dépasse un certain niveau mesuré par un capteur

Selon un mode de réalisation visible sur la figure 4, le premier système de gestion des flux 52.4 du premier circuit de fluide 52 comprend plusieurs vannes 90, 90', 90".

Comme illustré sur la partie gauche de la figure 9, une vanne 90 comprend une première partie 92 présentant des tronçons amont et aval, une deuxième partie 94 comportant une commande pour contrôler un écoulement de fluide entre les tronçons amont et aval ainsi que des éléments de liaison pour relier de manière démontable les première et deuxième parties 92, 94. Selon une configuration visible sur la partie droite de la figure 9, la première partie 92 de la vanne 90 est solidaire et intégrée au carter 60, notamment au fond 68 du carter 60. La première partie 92 correspond à une partie passive dans lequel aucun mouvement d'éléments n'est prévu mais présentant une forme permettant l'écoulement souhaité des fluides. La partie 94 correspond à la valve et la commande de celle-ci à savoir une partie active susceptible de requérir une maintenance plus importante

Ainsi, selon une autre caractéristique de l'invention, au moins un équipement des premier, deuxième et/ou troisième circuits de fluide 52, 54, 56 comprend des première et deuxième parties reliées entre elles de manière démontable par des éléments de liaison, l'une des première et deuxième parties étant solidaire et intégrée au carter 60. Cet agencement contribue à réduire le nombre de points de fixation à la structure primaire de l'aéronef et facilite la maintenance, les équipements nécessitant une maintenance étant positionnés au niveau du fond 68 du carter 60, partiellement intégrés à ce dernier carter 60 et donc accessibles depuis l'extérieur du carter 60.

Selon une caractéristique de l'invention, des parties actives de l'équipement telles qu'une partie électrique, une valve ou encore dans l'exemple ci-dessus la commande pour contrôler l'écoulement de fluide sont situées dans la partie démontable et non intégrée au carter de manière à pouvoir la retirer facilement et rapidement en cas de panne pour la réparer ou la remplacer. Une partie active est une partie permettant de faire fonctionner de manière active l'équipement concernée par exemple en déclenchant l'alimentation en électricité pour une partie électrique, en fermant, ouvrant une valve ou en activant une commande permettant de le faire ou de réguler un écoulement ... Elle implique un déplacement d'un élément de l'équipement que ce soit d'un élément structurel comme une valve, d'un élément électronique comme un interrupteur pour une partie électronique. Une partie passive d'un équipement est par exemple la coquille structurelle dans laquelle peut s'écouler un fluide ou un fil électrique dans lequel circule un courant, la coquille ou le fil électrique restant tels que sans que rien ne se déplace. L'idée est de prévoir au moins une partie active dans sa globalité ou de manière partielle dans la partie démontable pour la séparer facilement du carter. Si la partie active se trouve de manière partielle dans la partie démontable, les composants se trouvant dans la partie active sont ceux nécessitant une intervention plus fréquente que les autres du fait notamment de se déplacer

Selon une forme de réalisation, le carter 60 comprend une partie inférieure qui présente une géométrie telle que tous les éléments connectés de manière démontable au carter 60 sont fixés au carter 60 grâce à un mouvement vertical, de bas en haut, en direction du carter 60. En complément, le carter 60 comprend une partie supérieure qui présente une géométrie telle que les piles à combustible 32 sont fixées au carter 60 grâce à un mouvement vertical, de haut en bas, en direction du carter 60.

Selon un mode de réalisation illustré sur la figure 3, le dispositif de regroupement 30 comprend :
- des piles à combustible 32 dans lesquelles circulent des premier, deuxième et troisième fluides,
- un support 58 comportant un carter 60,
- pour le premier fluide, au moins une portion d'un premier circuit comprenant une première nourrice configurée pour alimenter en premier fluide les piles en combustible 32 ainsi qu'un premier collecteur configuré pour collecter le premier fluide des piles à combustible 32,
- pour le deuxième fluide, au moins une portion d'un deuxième circuit comprenant une deuxième nourrice configurée pour alimenter en deuxième fluide les piles à combustible 32 ainsi qu'un deuxième collecteur configuré pour collecter le deuxième fluide des piles à combustible 32,
- pour le troisième fluide, au moins une portion d'un troisième circuit de fluide comprenant une troisième nourrice configurée pour alimenter en troisième fluide les piles à combustible 32 ainsi qu'un troisième collecteur configuré pour collecter le troisième fluide des piles à combustible 32,
- les première, deuxième et troisième nourrices étant solidaires du carter 60, au moins l'une d'elles étant positionnée à l'intérieur du carter 60, entre ce dernier et les piles à combustible 32, dans le logement 78,
- les premier, deuxième et troisième collecteurs étant solidaires du carter 60, au moins l'un d'eux étant positionné à l'intérieur du carter 60, entre ce dernier et les piles à combustible 32, dans le logement 78.
- Certains équipements des premier, deuxième et/ou troisième circuits de fluide étant solidaires du carter 60 et partiellement intégrés à ce dernier.

Pour chaque circuit de fluide 52, 54, 56, le dispositif de regroupement 30 comprend une admission et un retour.

Quel que soit le mode de réalisation, un dispositif de regroupement 30 comprend :
- au moins deux piles à combustible 32 dans lesquelles circule au moins un premier fluide,
- un support 58 comportant un carter 60,
- pour le premier fluide, au moins une portion d'un premier circuit comprenant une première nourrice configurée pour alimenter en premier fluide les piles en combustible 32 ainsi qu'un premier collecteur configuré pour collecter le premier fluide des piles à combustible 32, la première nourrice et le premier collecteur étant solidaires du carter 60 et positionnés entre le carter 60 et les piles à combustible 32.

Un tel dispositif de regroupement 30 peut être déplacé ou manipulé d'un seul tenant. Il permet en outre de limiter le nombre de points de fixation sur la structure primaire de l'aéronef. Le fait de positionner la première nourrice et le premier collecteur entre le carter 60 et les piles à combustible 32 permet d'obtenir un ensemble plus compact.

Selon une configuration, le premier circuit comprend au moins un équipement partiellement intégré au carter 60. Cet agencement contribue entre autres à faciliter la maintenance.

Selon une configuration, les équipements nécessitant une maintenance plus fréquente sont positionnés en partie inférieure du carter 60 pour garantir une meilleure accessibilité et ne pas avoir besoin de démonter le carter 60 pour y accéder.

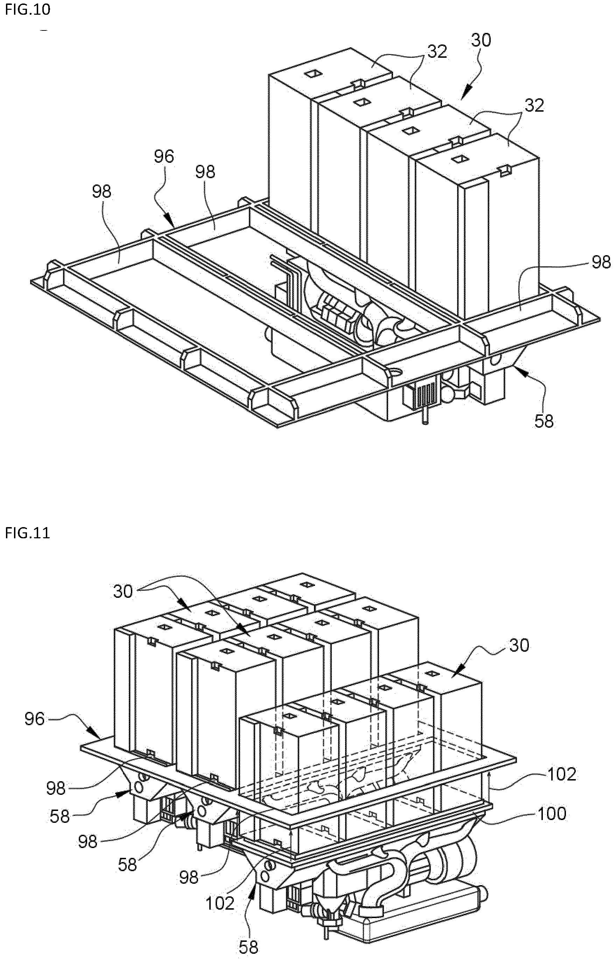

Selon un mode de réalisation illustré sur les figures 10 à 13, un aéronef comprend au moins un châssis 96, relié à la structure primaire de l'aéronef par des éléments de liaison, supportant plusieurs dispositifs de regroupement 30. Dans la forme illustrée, le châssis 96 se présente sous la forme d'une plaque structurelle plate rectangulaire comprenant une ou plusieurs ouvertures dans la forme illustrée rectangulaires pour le passage d'un ou plusieurs dispositifs de regroupement. Pour chaque dispositif de regroupement 30, le châssis 96 comprend un cadre 98 configuré pour permettre l'insertion des piles à combustible 32 du dispositif de regroupement et contre lequel prend appui l'épaulement extérieur 84 du carter 60. L'épaulement 84 permet le transfert des charges du carter vers le châssis 96 et donc la structure primaire de l'aéronef. Selon une configuration, un joint d'étanchéité périphérique 100 est intercalé entre l'épaulement extérieur 84 du carter 60 et le cadre 98 du châssis 96 et chaque carter 60 est relié au châssis 96 par des éléments de liaison 102 appropriés, comme illustré sur la figure 11. Cela peut être par exemple par une liaison par boulons

Selon un mode opératoire, chaque dispositif de regroupement 30 est assemblé au châssis 96 en l'introduisant depuis le dessous du châssis 96.

Lorsque tous les dispositifs de regroupement 30 sont reliés au châssis 96, les admissions des premiers circuits de fluide 52 sont raccordées à une nourrice principale 104 et les retours des premiers circuits de fluide 52 sont raccordés à un collecteur principal 106, comme illustré sur les figures 12 et 13.

## Revendications

1. Dispositif de regroupement de piles à combustible comprenant au moins deux piles à combustible (32) dans lesquelles circule au moins un premier fluide, le dispositif de regroupement (30) comprenant un support (58) ainsi qu'au moins une portion d'un premier circuit (52) pour le premier fluide comprenant une première nourrice (40) configurée pour alimenter en premier fluide les piles en combustible (32) et un premier collecteur (42) configuré pour collecter le premier fluide des piles à combustible (32), le support (58) comportant un carter (60), la première nourrice (40) et le premier collecteur (42) étant solidaires du carter (60) et positionnés entre le carter (60) et les piles à combustible (32), le dispositif de regroupement comprenant au moins un équipement (52.2, 90, 90', 90") pour au moins un circuit de fluide (52, 54, 56), **caractérisé en ce que** ledit équipement comporte des première et deuxième parties (86, 88, 92, 94) reliées de manière démontable par des éléments de liaison, au moins l'une des première et deuxième parties (86, 88, 92, 94) étant solidaire et intégrée au carter (60), la partie démontable étant une partie active.

2. Dispositif de regroupement selon la revendication 1, **caractérisé en ce qu'**un équipement est une valve et la partie démontable comprend la commande de l'écoulement de fluide entre une partie amont et aval compris dans la partie intégrée au carter.

3. Dispositif de regroupement selon l'une des revendications 1 ou 2, **caractérisé en ce qu'**un équipement est un système d'extraction d'eau et la partie active comprend une valve permettant de purger l'eau créée par le système d'extraction.

4. Dispositif de regroupement selon l'une des revendications précédentes, **caractérisé en ce que** le dispositif de regroupement (30) comprend :
- au moins une deuxième portion d'un deuxième circuit (54) pour un deuxième fluide circulant dans les piles à combustible (32) comportant une deuxième nourrice (44) configurée pour alimenter en deuxième fluide les piles à combustible (32) ainsi qu'un deuxième collecteur (46) configuré pour collecter le deuxième fluide des piles à combustible (32),
- au moins une troisième portion d'un troisième circuit (56) pour un troisième fluide circulant dans les piles à combustible (32) comportant une troisième nourrice (48) configurée pour alimenter en troisième fluide les piles à combustible (32) ainsi qu'un troisième collecteur (50) configuré pour collecter le troisième fluide des piles à combustible (32),
- les deuxième et troisième nourrices (44, 48) étant solidaires du carter (60), au moins l'une d'elles étant positionnée entre le carter (60) et les piles à combustible (32), les deuxième et troisième collecteurs (46, 50) étant solidaires du carter (60), au moins l'un d'eux étant positionné entre le carter (60) et les piles à combustible (32).

5. Dispositif de regroupement selon la revendication précédente, **caractérisé en ce que** le carter (60) comprend au moins une ouverture configurée pour coopérer avec au moins une des piles à combustible (32) et traversée par des conduits reliés à la pile à combustible (32).

6. Dispositif de regroupement selon la revendication précédente, **caractérisé en ce que** le carter (60) comprend un fond (68), deux parois transversales (70, 72) ainsi que deux parois longitudinales (74, 76) qui délimitent un logement (78) configuré pour loger au moins une nourrice parmi les première, deuxième et troisième nourrices (40, 44, 48) ainsi qu'au moins un collecteur parmi les premier, deuxième et troisième collecteurs (42, 46, 50).

7. Dispositif de regroupement selon la revendication précédente, **caractérisé en ce que** les parois transversales et longitudinales (70, 72, 74, 76) comprennent des bords supérieurs (E) qui forment une ceinture (80) entourant en fonctionnement les piles à combustible (32).

8. Dispositif de regroupement selon la revendication précédente, **caractérisé en ce que** le carter (60) comprend au moins un épaulement intérieur (82) décalé vers le fond (68) par rapport aux bords supérieurs (E) des parois transversales et longitudinales (70, 72, 74, 76), ledit épaulement intérieur (82) formant une surface de contact pour les piles à combustible (32).

9. Dispositif de regroupement selon l'une des revendications précédentes, **caractérisé en ce que**, pour chaque première, deuxième ou troisième nourrice ou collecteur (40, 42, 44, 46, 48, 50) positionné entre le carter (60) et les piles à combustible (32), le carter (60) comprend un premier ou deuxième orifice traversant (62, 64) configuré pour loger un conduit d'alimentation ou d'échappement (40.1, 42.1, 44.1, 46.1, 48.1, 50.1) de la nourrice ou du collecteur (40, 42, 44, 46, 48, 50) ou un conduit prolongeant le conduit d'alimentation ou d'échappement (40.1, 42.1, 44.1, 46.1, 48.1, 50.1) de la nourrice ou du collecteur (40, 42, 44, 46, 48, 50).

10. Dispositif de regroupement selon l'une des revendications précédentes, **caractérisé en ce que**, pour chaque première, deuxième ou troisième nourrice ou collecteur (40, 42, 44, 46, 48, 50) positionné à l'extérieur du carter (60), le carter (60) comprend un troisième ou quatrième orifice traversant (66, 67) pour chaque conduit de sortie ou d'entrée (40.2, 42.2, 44.2, 46.2, 48.2, 50.2) de la nourrice ou du collecteur (40, 42, 44, 46, 48, 50), chaque troisième ou quatrième orifice traversant (66, 67) étant configuré pour loger un des conduits de sortie ou d'entrée (40.2, 42.2, 44.2, 46.2, 48.2, 50.2) de la nourrice ou du collecteur (40, 42, 44, 46, 48, 50) ou un conduit prolongeant un des conduits de sortie ou d'entrée (40.2, 42.2, 44.2, 46.2, 48.2, 50.2) de la nourrice ou du collecteur (40, 42, 44, 46, 48, 50).

11. Aéronef comprenant une structure primaire ainsi qu'au moins un dispositif de regroupement de piles à combustible selon l'une des revendications précédentes.

12. Aéronef selon la revendication précédente, **caractérisé en ce que** l'aéronef comprend au moins un châssis (96) relié à la structure primaire de l'aéronef pour chaque dispositif de regroupement, le châssis (96) comprenant un cadre (98) configuré pour permettre l'insertion des piles à combustible (32) du dispositif de regroupement et contre lequel prend appui le carter (60).

13. Aéronef selon la revendication précédente, **caractérisé en ce que** chaque carter (60) comprend au moins un épaulement extérieur (84) s'étendant sur au moins une partie de sa périphérie et configuré pour prendre appui contre l'un des cadres (98) du châssis (96) pour transférer les charges du carter vers la structure primaire, un joint d'étanchéité périphérique (100) étant intercalé entre l'épaulement extérieur (84) du carter (60) et le cadre (98) du châssis (96).

14. Aéronef selon la revendication précédente, **caractérisé en ce que** chaque carter (60) comprend au moins un épaulement extérieur (84) s'étendant sur toute sa périphérie.

## Patentansprüche

1. Vorrichtung zum Gruppieren von Brennstoffzellen, die mindestens zwei Brennstoffzellen (32) beinhaltet, in denen mindestens ein erstes Fluid zirkuliert, wobei die Vorrichtung zum Gruppieren (30) einen Träger (58) sowie mindestens einen Abschnitt eines ersten Kreislaufs (52) für das erste Fluid beinhaltet, der einen ersten Verteiler (40), der dazu konfiguriert ist, die Brennstoffzellen (32) mit dem ersten Fluid zu versorgen, und einen ersten Sammler (42), der dazu konfiguriert ist, das erste Fluid aus den Brennstoffzellen (32) zu sammeln, beinhaltet, wobei der Träger (58) ein Gehäuse (60) umfasst, wobei der erste Verteiler (40) und der erste Sammler (42) mit dem Gehäuse (60) fest verbunden sind und zwischen dem Gehäuse (60) und den Brennstoffzellen (32) positioniert sind, wobei die Vorrichtung zum Gruppieren mindestens eine Ausrüstung (52.2, 90, 90', 90'') für mindestens einen Fluidkreislauf (52, 54, 56) beinhaltet, **dadurch gekennzeichnet, dass** die Ausrüstung einen ersten und einen zweiten Teil (86, 88, 92, 94) umfasst, die durch Verbindungselemente entfernbar verbunden sind, wobei mindestens einer von dem ersten und zweiten Teil (86, 88, 92, 94) mit dem Gehäuse (60) fest verbunden und darin integriert ist, wobei der entfernbare Teil ein aktiver Teil ist.

2. Vorrichtung zum Gruppieren nach Anspruch 1, **dadurch gekennzeichnet, dass** eine Ausrüstung ein Ventil ist und der entfernbare Teil die Steuerung der Fluidströmung zwischen einem stromaufwärtigen und einem stromabwärtigen Teil, die in dem in das Gehäuse integrierten Teil enthalten sind, beinhaltet.

3. Vorrichtung zum Gruppieren nach einem der Ansprüche 1 oder 2, **dadurch gekennzeichnet, dass** eine Ausrüstung ein Wasserentnahmesystem ist und der aktive Teil ein Ventil beinhaltet, das es gestattet, das durch das Entnahmesystem erzeugte Wasser abzuführen.

4. Vorrichtung zum Gruppieren nach einem der vorhergehenden Ansprüche, **dadurch gekennzeichnet, dass** die Vorrichtung zum Gruppieren (30) Folgendes beinhaltet:
- mindestens einen zweiten Abschnitt eines zweiten Kreislaufs (54) für ein zweites Fluid, das in den Brennstoffzellen (32) zirkuliert, der einen zweiten Verteiler (44), der dazu konfiguriert ist, die Brennstoffzellen (32) mit einem zweiten Fluid zu versorgen, sowie einen zweiten Sammler (46), der dazu konfiguriert ist, das zweite Fluid aus den Brennstoffzellen (32) zu sammeln, umfasst,
- mindestens einen dritten Abschnitt eines dritten Kreislaufs (56) für ein drittes Fluid, das in den Brennstoffzellen (32) zirkuliert, der einen dritten Verteiler (48), der dazu konfiguriert ist, die Brennstoffzellen (32) mit einem dritten Fluid zu versorgen, sowie einen dritten Sammler (50), der dazu konfiguriert ist, das dritte Fluid aus den Brennstoffzellen (32) zu sammeln, umfasst,
- wobei der zweite und der dritte Verteiler (44, 48) mit dem Gehäuse (60) fest verbunden sind, wobei mindestens einer von ihnen zwischen dem Gehäuse (60) und den Brennstoffzellen (32) positioniert ist, wobei der zweite und der dritte Sammler (46, 50) mit dem Gehäuse (60) fest verbunden sind, wobei mindestens einer von ihnen zwischen dem Gehäuse (60) und den Brennstoffzellen (32) positioniert ist.

5. Vorrichtung zum Gruppieren nach dem vorhergehenden Anspruch, **dadurch gekennzeichnet, dass** das Gehäuse (60) mindestens eine Öffnung beinhaltet, die dazu konfiguriert ist, mit mindestens einer der Brennstoffzellen (32) zusammenzuwirken, und von Leitungen durchquert wird, die mit der Brennstoffzelle (32) verbunden sind.

6. Vorrichtung zum Gruppieren nach dem vorhergehenden Anspruch, **dadurch gekennzeichnet, dass** das Gehäuse (60) einen Boden (68), zwei Querwände (70, 72) sowie zwei Längswände (74, 76) beinhaltet, die eine Aufnahme (78) begrenzen, die dazu konfiguriert ist, mindestens einen Verteiler von dem ersten, zweiten und dritten Verteiler (40, 44, 48) sowie mindestens einen Sammler von dem ersten, zweiten und dritten Sammler (42, 46, 50) aufzunehmen.

7. Vorrichtung zum Gruppieren nach dem vorhergehenden Anspruch, **dadurch gekennzeichnet, dass** die Quer- und Längswände (70, 72, 74, 76) obere Ränder (E) beinhalten, die eine Umrandung (80) bilden, die die Brennstoffzellen (32) im Betrieb umgibt.

8. Vorrichtung zum Gruppieren nach dem vorhergehenden Anspruch, **dadurch gekennzeichnet, dass** das Gehäuse (60) mindestens einen inneren Vorsprung (82) beinhaltet, der in Bezug auf die oberen Ränder (E) der Quer- und Längswände (70, 72, 74, 76) zum Boden (68) hin versetzt ist, wobei der innere Vorsprung (82) eine Kontaktfläche für die Brennstoffzellen (32) bildet.

9. Vorrichtung zum Gruppieren nach einem der vorhergehenden Ansprüche, **dadurch gekennzeichnet, dass** das Gehäuse (60) für jeden ersten, zweiten oder dritten Verteiler oder Sammler (40, 42, 44, 46, 48, 50), der zwischen dem Gehäuse (60) und den Brennstoffzellen (32) positioniert ist, eine erste oder zweite Durchgangsöffnung (62, 64) beinhaltet, die dazu konfiguriert ist, eine Versorgungs- oder Abführleitung (40.1, 42.1, 44.1, 46.1, 48.1, 50.1) des Verteilers oder des Sammlers (40, 42, 44, 46, 48, 50) oder eine Leitung, die die Versorgungs- oder Abführleitung (40.1, 42.1, 44.1, 46.1, 48.1, 50.1) des Verteilers oder des Sammlers (40, 42, 44, 46, 48, 50) verlängert, aufzunehmen.

10. Vorrichtung zum Gruppieren nach einem der vorhergehenden Ansprüche, **dadurch gekennzeichnet, dass** das Gehäuse (60) für jeden ersten, zweiten oder dritten Verteiler oder Sammler (40, 42, 44, 46, 48, 50), der außerhalb des Gehäuses (60) positioniert ist, eine dritte oder vierte Durchgangsöffnung (66, 67) für jede Ausgangs- oder Eingangsleitung (40.2, 42.2, 44.2, 46.2, 48.2, 50.2) des Verteilers oder des Sammlers (40, 42, 44, 46, 48, 50) beinhaltet, wobei jede dritte oder vierte Durchgangsöffnung (66, 67) dazu konfiguriert ist, eine der Ausgangs- oder Eingangsleitungen (40.2, 42.2, 44.2, 46.2, 48.2, 50.2) des Verteilers oder des Sammlers (40, 42, 44, 46, 48, 50) oder eine Leitung, die eine der Ausgangs- oder Eingangsleitungen (40.2, 42.2, 44.2, 46.2, 48.2, 50.2) des Verteilers oder des Sammlers (40, 42, 44, 46, 48, 50) verlängert, aufzunehmen.

11. Luftfahrzeug, das eine Primärstruktur sowie mindestens eine Vorrichtung zum Gruppieren von Brennstoffzellen nach einem der vorhergehenden Ansprüche beinhaltet.

12. Luftfahrzeug nach dem vorhergehenden Anspruch, **dadurch gekennzeichnet, dass** das Luftfahrzeug für jede Vorrichtung zum Gruppieren mindestens ein Gestell (96) beinhaltet, das mit der Primärstruktur des Luftfahrzeugs verbunden ist, wobei das Gestell (96) einen Rahmen (98) beinhaltet, der dazu konfiguriert ist, das Einführen der Brennstoffzellen (32) der Vorrichtung zum Gruppieren zu gestatten, und an dem das Gehäuse (60) zur Anlage kommt.

13. Luftfahrzeug nach dem vorhergehenden Anspruch, **dadurch gekennzeichnet, dass** jedes Gehäuse (60) mindestens einen äußeren Vorsprung (84) beinhaltet, der sich über mindestens einen Teil seines Umfangs erstreckt und dazu konfiguriert ist, an einem der Rahmen (98) des Gestells (96) zur Anlage zu kommen, um die Lasten des Gehäuses auf die Primärstruktur zu übertragen, wobei zwischen dem äußeren Vorsprung (84) des Gehäuses (60) und dem Rahmen (98) des Gestells (96) eine Umfangsdichtung (100) eingefügt ist.

14. Luftfahrzeug nach dem vorhergehenden Anspruch, **dadurch gekennzeichnet, dass** jedes Gehäuse (60) mindestens einen äußeren Vorsprung (84) beinhaltet, der sich über den gesamten Umfang davon erstreckt.

## Claims

1. Grouping device for grouping together fuel cells, comprising at least two fuel cells (32) in which at least a first fluid circulates, the grouping device (30) comprising a support (58) and at least a portion of a first circuit (52) for the first fluid comprising a first feeder (40) configured to supply the fuel cells (32) with first fluid and a first manifold (42) configured to collect the first fluid from the fuel cells (32), the support (58) comprising a casing (60), the first feeder (40) and the first manifold (42) being secured to the casing (60) and positioned between the casing (60) and the fuel cells (32), the grouping device comprising at least one item of equipment (52.2, 90, 90', 90") for at least one fluid circuit (52, 54, 56), **characterized in that** said item of equipment comprises first and second parts (86, 88, 92, 94) removably connected by connection elements, at least one of the first and second parts (86, 88, 92, 94) being secured to and integrated in the casing (60), the removable part being an active part.

2. Grouping device according to Claim 1, **characterized in that** an item of equipment is a valve and the removable part comprises the command of the flow of fluid between an upstream and downstream part comprised in the part integrated in the casing.

3. Grouping device according to either of Claims 1 and 2, **characterized in that** an item of equipment is a water extraction system and the active part comprises a valve allowing the water created by the extraction system to be purged.

4. Grouping device according to one of the preceding claims, **characterized in that** the grouping device (30) comprises:
- at least a second portion of a second circuit (54) for a second fluid flowing in the fuel cells (32) comprising a second feeder (44) configured to supply the fuel cells (32) with second fluid and a second manifold (46) configured to collect the second fluid from the fuel cells (32),
- at least a third portion of a third circuit (56) for a third fluid flowing in the fuel cells (32) comprising a third feeder (48) configured to supply the fuel cells (32) with third fluid and a third manifold (50) configured to collect the third fluid from the fuel cells (32),
- the second and third feeders (44, 48) being secured to the casing (60), at least one of them being positioned between the casing (60) and the fuel cells (32), the second and third manifolds (46, 50) being secured to the casing (60), at least one of them being positioned between the casing (60) and the fuel cells (32).

5. Grouping device according to the preceding claim, **characterized in that** the casing (60) comprises at least one opening configured to cooperate with at least one of the fuel cells (32) and passed through by ducts connected to the fuel cell (32).

6. Grouping device according to the preceding claim, **characterized in that** the casing (60) comprises a bottom (68), two transverse walls (70, 72) and two longitudinal walls (74, 76) which delimit a housing (78) configured to house at least one feeder out of the first, second and third feeders (40, 44, 48) and at least one manifold out of the first, second and third manifolds (42, 46, 50).

7. Grouping device according to the preceding claim, **characterized in that** the transverse and longitudinal walls (70, 72, 74, 76) comprise upper edges (E) forming a belt (80) which, in operation, surrounds the fuel cells (32).

8. Grouping device according to the preceding claim, **characterized in that** the casing (60) comprises at least one inner shoulder (82) offset towards the bottom (68) with respect to the upper edges (E) of the transverse and longitudinal walls (70, 72, 74, 76), said inner shoulder (82) forming a contact surface for the fuel cells (32).

9. Grouping device according to one of the preceding claims, **characterized in that**, for each first, second or third feeder or manifold (40, 42, 44, 46, 48, 50) positioned between the casing (60) and the fuel cells (32), the casing (60) comprises a first or second through-hole (62, 64) configured to house a supply or discharge duct (40.1, 42.1, 44.1, 46.1, 48.1, 50.1) of the feeder or of the manifold (40, 42, 44, 46, 48, 50) or a duct extending the supply or discharge duct (40.1, 42.1, 44.1, 46.1, 48.1, 50.1) of the feeder or of the manifold (40, 42, 44, 46, 48, 50).

10. Grouping device according to one of the preceding claims, **characterized in that**, for each first, second or third feeder or manifold (40, 42, 44, 46, 48, 50) positioned outside the casing (60), the casing (60) comprises a third or fourth through-hole (66, 67) for each outlet or inlet duct (40.2, 42.2, 44.2, 46.2, 48.2, 50.2) of the feeder or of the manifold (40, 42, 44, 46, 48, 50), each third or fourth through-hole (66, 67) being configured to house one of the outlet or inlet ducts (40.2, 42.2, 44.2, 46.2, 48.2, 50.2) of the feeder or of the manifold (40, 42, 44, 46, 48, 50) or a duct extending one of the outlet or inlet ducts (40.2, 42.2, 44.2, 46.2, 48.2, 50.2) of the feeder or of the manifold (40, 42, 44, 46, 48, 50).

11. Aircraft comprising a primary structure and at least one grouping device for grouping together fuel cells according to one of the preceding claims.

12. Aircraft according to the preceding claim, **characterized in that** the aircraft comprises at least one frame (96) connected to the primary structure of the aircraft for each grouping device, the frame (96) comprising a surround (98) which is configured to allow insertion of the fuel cells (32) of the grouping device and against which the casing (60) bears.

13. Aircraft according to the preceding claim, **characterized in that** each casing (60) comprises at least one outer shoulder (84) extending over at least a part of its periphery and configured to bear against one of the surrounds (98) of the frame (96) in order to transfer the loads from the casing to the primary structure, a peripheral seal (100) being interposed between the outer shoulder (84) of the casing (60) and the surround (98) of the frame (96).

14. Aircraft according to the preceding claim, **characterized in that** each casing (60) comprises at least one outer shoulder (84) extending over its entire periphery.
